# EUROPEAN PATENT APPLICATION

(11) **EP 1 126 191 A2**
(43) Date of publication of application: **22.08.2001**
(21) Application number: 01103477.4
(22) Date of filing: 14.02.2001
(51) Int. Cl.: F16D 55/2265

(54) **A guide member**

(30) Priority: 16.02.2000 IT TO000151
(71) Applicant: I.B.S.-Industria Bulloneria Speciale S.r.l., 10090 Ferriera Di Buttigliera Alta (Torino) (IT)
(72) Inventor: Fontana, Luigi, 20050 Veduggio con Colzano, (Milano) (IT)
(74) Representative: Gerbino, Angelo

(57) **Abstract**

The guide member for enabling an associated mechanical part to be slidable and centred, includes a shank (10) extending along a longitudinal axis (12). A circumferential portion of the external surface of the shank (10) is provided with helical grooves (14), wherein the crests (16) formed between respective pairs of adjacent turns of the grooves (14) have a flat surface substantially parallel to the axis (12) of the shank (10).

A method for manufacturing such guide member involves producing a preform of the shank (10); rolling a portion of the external surface of the shank (10) so as to form helical grooves (14); and rolling the tops of the crests (16) between respective turns of the grooves (14) with a flat tool in such a way that the surface thereof is substantially parallel to the axis (12) of the shank (10).

## Description

The present invention relates to a guide member for enabling sliding and centring of an associated mechanical part, such as a calliper of a disc brake.

Guide members are known in the art with a cylindrical shank with a smooth external surface and extending along a longitudinal axis. Such members need to comply with very restrictive tolerance requirements and their manufacture thus involves relatively complex and expensive operations, such as grinding, coining, turning and the like, carried out on low-productivity machines and thus incurring high costs in equipment and time.

In addition, when such prior art members are fitted into a blind housing they produce a pump effect, due to compression of the air in the end portion of the housing, which impairs their working. This pump effect is exacerbated when the outer surface of the member is coated with lubricating grease, which tends to seal in the air which would otherwise escape from the housing.

In order to prevent such problems, the object of the present invention is to provide a guide member which includes a shank extending along a longitudinal axis and characterised in that there is at least one helical groove over at least a circumferential portion of the external surface of the said shank, with the crests between respective pairs of adjacent turns of the groove having a flat profile substantially parallel to the axis of the shank.

The guide member of the invention causes no pump effect since the air trapped in the bottom of the associated housing can escape through the groove while, at the same time, the flat profile of the crests ensure that dimensional tolerance and general operational effectiveness are complied with in a manner comparable to the prior art.

A further object of the invention is constituted by a method for producing the guide member described above, which includes the steps of:
- producing a preform of the shank,
- rolling at least a circumferential portion of the shank so as to form at least one helical groove in the external surface thereof, and
- rolling with a flat tool so as to flatten the top of the crests formed between pairs of adjacent turns of the groove, so that the surface thus formed is substantially parallel to the axis of the shank.

The forming and rolling operations are commonly used in the manufacture of screws and the like and can be carried out at high productivity with little difficulty.

Compared to the production of prior art guide members, this method offers the advantage of being faster and less costly.

Further advantages and characteristics of the present invention will become apparent from the detailed description which follows, Iprovided purely by way of non-limitative example, with reference to the appended drawings, in which:
Figure 1 is a side view of a guide member of the invention,
Figure 2 is a view on an enlarged scale of a detail of Figure 1,
Figure 3 is a side view of a different embodiment of the invention, and
Figure 4 is a side view of a further embodiment of the invention.

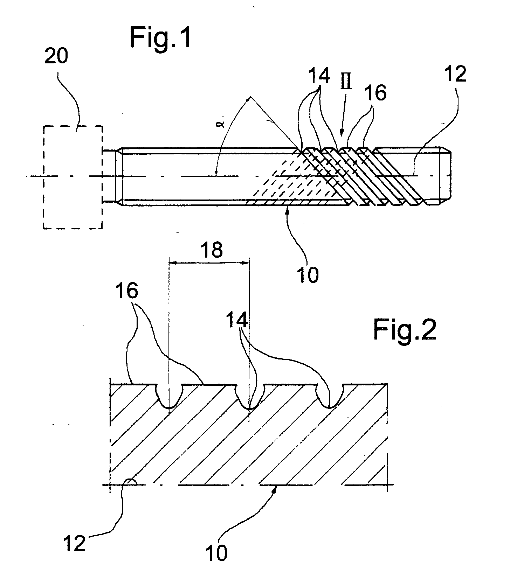

A guide member, in particular for a disc brake calliper, includes (see Figure 1) a shank or stem 10 which extends along a longitudinal axis 12. The shank 10 has a cylindrical surface with a plurality of helical grooves 14 over substantially its entire lateral surface in the manner of a multiple start screw. The surfaces of the crests 16 between adjacent turns of the grooves 14 are flat (see Figure 2) and substantially parallel to the axis 12 of the shank 10.

There are preferably between 2 and 15 grooves 14 all with an inclination α to the axis 12 of between 20° and 80°. The width of each crest 16 and of each groove 14 is also preferably between 0.5 and 8mm, while the pitch 18, that is the distance in an axial direction between adjacent turns of the grooves 16, is of between 1 and 10mm.

One end of the shank 10 has a head 20, the actual presence, shape and characteristics of which are, however, entirely inconsequential in the context of the invention.

When engaged in a blind housing, the guide member does not produce a pump effect since the air trapped in the bottom of the housing can escape through the grooves 14. At the same time, the latter constitute a preferential site for any lubricating grease used.

A method for producing a guide member as described involves first producing a preform of the shank 10, the helical grooves 14 then being formed in the lateral surface by rolling. The crests 16 formed between pairs of adjacent turns of grooves 14 are then rolled with a flat tool to flatten the tops thereof in such a way that these surfaces are substantially parallel to the axis 12 of the shank 10. If necessary, the entire surface, or parts thereof, of the guide member can be covered with a film satisfying particular requirements.

The material used to produce the guide member of the invention can be any of those normally used for the manufacture of high-precision mechanical parts and, in particular, it does not matter if it is tempered or not.

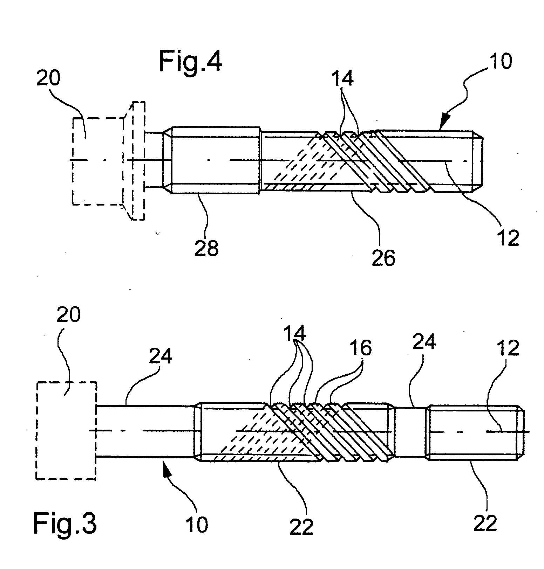

Figure 3 shows a further embodiment of the guide member, in which reference numbers used in the preceding drawings correspond to identical or equivalent parts.

In this case, the shank 10 has grooves 14 like those described above only around two limited portions 22 of its length. The diameter of the portions 24 of the shank 10 not provided with the grooves 14 is smaller than that of the portions 22.

Figure 4 shows a still further embodiment of the guide member of the invention, in which reference numbers used in the preceding drawings correspond to identical or equivalent parts.

In this case, the shank 10 has two portions 26, 28 of different diameters, both provided with a plurality of helical grooves 14.

Naturally, the principle of the invention remaining unchanged, manufacturing details and embodiments may be varied widely from those described and illustrated purely by way of non-limitative example, without departing thereby from the scope of the invention. In particular, the guide member of the invention need not be specifically limited to the numerical values given below but could, for example have a diameter of between 5 and 30 mm, a length of between 20 and 300 mm, tolerances of the order of 0.02 mm for diameters of between 5 and 14 mm, straightness and cylindricity tolerances of 0.005 for diameters of between 5 and 14 mm and lengths of less than 100 mm and surface roughness of less than Ra 0.8.

## Claims

1. A guide member for permitting sliding and centring of an associated mechanical part, including a shank (10) which extends along a longitudinal axis (12), the said guide member being characterised in that at least one circumferential portion of the external surface of the said shank (10) is provided with at least one helical groove (14), the crests (16) formed between respective pairs of adjacent turns of the grooves (14) each having a flat surface substantially parallel to the axis (12) of the shank (10).

2. A guide member according to Claim 1, characterised in that the said shank (10) is provided with a plurality of helical grooves (14).

3. A guide member according to either of the preceding Claims, characterised in that the said at least one groove (14) has an inclination (α) to the axis (12) of between 20° and 80°.

4. A guide member according to any one of the preceding Claims, characterised in that the said grooves (14) number between 2 and 15.

5. A guide member according to any one of the preceding Claims, characterised in that the pitch (18) of the said at least one groove (14) is of between 1 and 10 mm.

6. A guide member according to any one of the preceding Claims, characterised in that the said at least one groove (14) extends along substantially the entire length of the shank (10).

7. A guide member according to any one of Claims 1 to 5, characterised in that the said at least one groove (14) extends through one or more longitudinally limited portions of the shank (10).

8. A guide member according to any one of Claims 1 to 5, characterised in that a plurality of circumferential portions (26, 28) of the external surface of the shank (10) are provided with at least one helical groove (14), the said diameters of the said portions (26, 28) being of different sizes.

9. A method for the manufacture of a guide members according to any one of the preceding Claims, which includes the steps of:
- producing a preform of the shank (10),
- rolling at least one circumferential portion of the external surface of the shank (10) so as to form at least one helical groove (14), and
- rolling with a flat tool the tops of the crests (16) formed between respective pairs of adjacent turns of the grooves (14) so that the surface thereof is substantially parallel to the axis (12) of the shank (10).
